(19) Europäisches Patentamt
European Patent Office
Office européen des brevets

(11) Veröffentlichungsnummer: **0 012 820**
**B1**

(12) # EUROPÄISCHE PATENTSCHRIFT

(45) Veröffentlichungstag der Patentschrift: **02.09.81**

(51) Int. Cl.³: **C 07 C 121/64,** C 09 K 3/34 // C07C69/75, C07C69/773

(21) Anmeldenummer: **79104356.5**

(22) Anmeldetag: **07.11.79**

(54) **Flüssigkristalline Carbonsäureester, Verfahren zu ihrer Herstellung, diese enthaltende Dielektrika und elektrooptisches Anzeigeelement.**

(30) Priorität: **13.12.78 DE 2853728**

(43) Veröffentlichungstag der Anmeldung: **09.07.80 Patentblatt 80/14**

(45) Bekanntmachung des Hinweises auf die Patenterteilung: **02.09.81 Patentblatt 81/35**

(84) Benannte Vertragsstaaten: **AT CH DE FR GB IT NL**

(56) Entgegenhaltungen:
**DE-A1-2 613 293**
**DE-A1-2 800 553**
**DE-A1-2 831 469**
**US-A-4 029 595**

(73) Patentinhaber: **Merck Patent Gesellschaft mit beschränkter Haftung, Frankfurter Strasse 250, D-6100 Darmstadt (DE)**

(72) Erfinder: **Eidenschink, Rudolf, Dr., Dessauer Strasse 57, D-6110 Dieburg (DE)**
Erfinder: **Krause, Joachim, Dr., Samuel-Morse-Strasse 14, D-6110 Dieburg (DE)**
Erfinder: **Pohl, Ludwig, Dr., Hoffmannstrasse 54, D-6100 Darmstadt (DE)**

**EP 0 012 820 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Flüssigkristalline Carbonsäureester, Verfahren zu ihrer Herstellung, diese enthaltende Dielektrika und elektrooptisches Anzeigeelement

Die Erfindung betrifft flüssigkristalline Carbonsäureester und ihre Verwendung zur Modifizierung der dielektrischen Anisotropie (DKA) flüssigkristalliner Dielektrika.

Für elektrooptische Anzeigeelemente, deren Arbeitsweise auf den Phänomenen der dynamischen Streuung oder der Deformation aufgerichteter Phasen (DAP-Effekt) beruht, werden flüssigkristalline Dielektrika mit deutlich negativer DKA benötigt. Die Schwellenspannung für den Betrieb derartiger Anzeigeelemente ist um so kleiner, je negativer die DKA des flüssigkristallinen Dielektrikums ist. Eine weitere Grundanforderung an derartige Dielektrika ist ein breiter, die Raumtemperatur einschließender Temperaturbereich der nematischen Phase.

Unter den in der Praxis gebräuchlichen flüssigkristallinen Basismaterialien solcher Dielektrika, die zugleich auch die erforderliche chemische Beständigkeit besitzen, in der Regel Mischungen von zwei oder mehr Verbindungen aus den Klassen der Azoxybenzole, der Benzoesäurephenylester, der Thiobenzoesäurephenylester und der Phenylcyclohexane, gibt es keine mit einer ausgeprägt negativen DKA. Um aus derartigen Mischungen flüssigkristalline Dielektrika mit ausgeprägt negativer DKA herzustellen, werden diese mit solchen flüssigkristallinen Verbindungen versetzt, die eine sehr starke negative DKA besitzen; bevorzugt werden als solche die 4,4″-disubstituierten Benzoyloxybenzoesäure-2″-cyanophenylester nach der DE-PS 2 240 864 oder die p,p″-disubstituierten Biphenylylcarbonsäure-2″-cyanophenylester nach der DE-OS 2 613 293 verwendet. Es hat sich jedoch gezeigt, daß diese die DKA herabsetzenden Verbindungen entweder in den flüssigkristallinen Basismaterialien nicht ausreichend löslich sind, um eine negative DKA der gewünschten Größe zu erreichen, oder eine unerwünschte Verschiebung des Temperaturbereichs der nematischen Phase bewirken. Zwar ist es in beschränktem Maße möglich, die Löslichkeitsprobleme durch die Verwendung mehrerer verschiedener DKA-modifizierender Verbindungen zu umgehen, sowie einen unerwünscht verkleinerten oder verschobenen Temperaturbereich der nematischen Phase durch das Zufügen von p,p″-disubstituierten Benzoyloxybenzoesäurephenylestern nach der DE-OS 2 139 628 oder von p,p″-disubstituierten Biphenylylcarbonsäurephenylestern nach der DE-OS 2 450 088 wieder zu erweitern bzw. zu korrigieren. In allen Fällen sind die so erhaltenen flüssigkristallinen Dielektrika jedoch Vielkomponentengemische, deren Produktion in größerem Maßstab sehr aufwendig ist.

Der Erfindung liegt somit die Aufgabe zugrunde, flüssigkristalline Dielektrika mit deutlich negativer DKA und einem möglichst breiten, die Raumtemperatur einschließenden Temperaturbereich der nematischen Phase zur Verfügung zu stellen.

Erfindungsgemäß wird diese Aufgabe dadurch gelöst, daß als DKA-modifizierende Komponenten flüssigkristalliner Dielektrika flüssigkristalline Carbonsäureester der Formel (I) verwendet werden

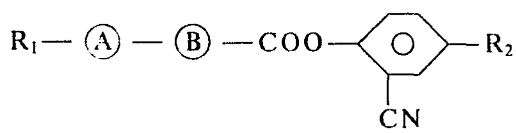
(I)

worin einer der Ringe A und B ein trans-1,4-disubstituierter Cyclohexanring und der andere ein 1,4-disubstituierter Phenylring ist, und $R_1$ und $R_2$ Alkyl mit 1—10 C-Atomen bedeuten.

Die Verbindungen der Formel (I) besitzen eine hohe negative DKA und sind in den vorstehend erwähnten und auch weiteren flüssigkristallinen Basismaterialien überraschenderweise deutlich besser löslich als die analog gebauten Ester nach der DE-OS 2 613 293, in der jedoch alle Ringe Phenylringe sind. Dadurch lassen sich flüssigkristalline Dielektrika mit einer ausgeprägt negativen DKA aus einer geringeren Zahl von Komponenten und damit weniger aufwendig als bisher darstellen. Die Verbindungen der Formel (I) erweitern außerdem den Temperaturbereich der nematischen Phase der flüssigkristallinen Basismaterialien in der Weise, daß in der Regel der Schmelzpunkt herabgesetzt und/oder der Klärpunkt deutlich erhöht wird. Aufgrund dieser Eigenschaften können sie ferner dazu verwendet werden, aus flüssigkristallinen Basismaterialien mit einer stark positiven DKA, zum Beispiel den Cyanobiphenylen nach der DE-OS 2 356 085, Dielektrika mit einer mäßig hohen positiven DKA und einem breiten Temperaturbereich der nematischen Phase herzustellen; solche Dielektrika werden insbesondere für Anzeigeelemente verwendet, die auf der Basis des Schadt-Helfrich-Effekts in der verdrillten Zelle im Multiplexbetrieb arbeiten.

Gegenstand der Erfindung sind somit die flüssigkristallinen Carbonsäureester der Formel (I) sowie Verfahren zu ihrer Herstellung. Gegenstand der Erfindung ist weiterhin die Verwendung der Verbindungen der Formel (I) zur Herabsetzung der DKA flüssigkristalliner Dielektrika, insbesondere zur Herstellung solcher Dielektrika mit ausgeprägt negativer DKA. Gegenstand der Erfindung sind ferner flüssigkristalline Dielektrika aus mindestens zwei flüssigkristallinen Komponenten, von denen mindestens eine Komponente eine Verbindung der Formel (I) ist, sowie elektrooptische Anzeigeelemente, die die erfindungsgemäßen Dielektrika enthalten.

Die erfindungsgemäßen Verbindungen der Formel (I) sind entweder 4-(4-Alkylcyclohexyl)-benzoesäure-2-cyano-4-alkylphenylester der Formel (Ia)

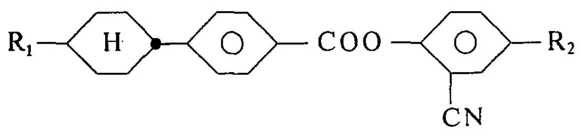

(Ia)

worin $R_1$ und $R_2$ die in Formel (I) angegebene Bedeutung besitzen, oder 4-(4-Alkylphenyl)-cyclohexancarbonsäure-2-cyano-4-alkylphenylester der Formel (Ib)

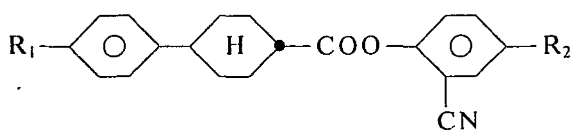

(Ib)

worin $R_1$ und $R_2$ die in Formel (I) angegebene Bedeutung besitzen. In allen Verbindungen der Formel (I) liegt der Cyclohexanring in der trans-1,4-disubstituierten »Sessel«-Konfiguration vor; in den Formelbildern ist dies durch den schwarzen Markierungspunkt auf der rechten Seite des Cyclohexanrings kenntlich gemacht.

Die Verbindungen der Formel (Ia) haben in der Regel höhere Klärpunkte als die der Formel (Ib). Wenn die Löslichkeit und die erzielbare DKA bei zwei Verbindungen der Formeln (Ia) und (Ib) vergleichbar sind, werden die Verbindungen der Formel (Ia) bevorzugt.

In den Verbindungen der Formel (I) sind die Flügelgruppen $R_1$ und $R_2$ gleich oder vorzugsweise verschieden. Soweit sie Alkylgruppen mit drei oder mehr Kohlenstoffatomen sind, können diese in gerade oder verzweigter Kette angeordnet sein. Dabei zeigen die Verbindungen der Formel (I) die günstigsten Eigenschaften, in denen mindestens eine der Alkylgruppen geradkettig ist, also Methyl, Äthyl, n-Propyl, n-Butyl, n-Pentyl, n-Hexyl, n-Heptyl, n-Octyl, n-Nonyl oder n-Decyl.

Ferner sind hiervon die Verbindungen besonders wertvoll, in denen die beiden Alkylgruppen zusammen mindestens 3, vorzugsweise 4—16, insbesondere 5—14 C-Atome enthalten.

Wenn eine Verbindung der Formel (I) eine verzweigte Alkylgruppe enthält, ist diese vorzugsweise nur einmal verzweigt. In diesem Fall hat es sich als besonders günstig herausgestellt, wenn sich die Verzweigung in der 2- oder 3-Stellung der Alkylgruppe, vom aromatischen Kern her gezählt, befindet. Als verzweigte Alkylgruppen werden die folgenden bevorzugt:

2-Methylpropyl, 2-Methylbutyl, 3-Methylbutyl, 2-Methylpentyl, 3-Methylpentyl, 2-Methylhexyl, 2-Äthylhexyl, 2-Methylheptyl, 2-Methyloctyl, 2-Äthyloctyl, 2-Methylnonyl.

Die Verbindungen der Formel (I) werden in für derartige Verbindungen üblicher Weise hergestellt; vorzugsweise setzt man eine Verbindung der Formel (II)

$$R_1 — (A) — (B) — Z \qquad (II)$$

worin
Z COOH oder ein reaktionsfähiges Derivat der Carboxylgruppe bedeutet, und
A, B und $R_1$ die in Formel (I) angegebene Bedeutung besitzen,
bei einer Temperatur zwischen −50°C und +250°C, gegebenenfalls in Gegenwart eines organischen Lösungsmittels und/oder eines üblichen Veresterungskatalysators, mit einer Verbindung der Formel (III) um,

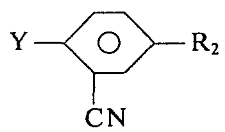

(III)

worin Y OH oder OMe bedeutet, wobei Me ein Äquivalent eines Metall- oder Ammoniumkations ist, und $R_2$ die in Formel (I) angegebene Bedeutung besitzt.

Als reaktionsfähige Carboxylgruppenderivate kommen nach der Erfindung insbesondere —CO-Halogen, insbesondere —COCl, —COO-Niederalkyl, zum Beispiel $-COOCH_3$ oder eine Anhydridgruppierung, wie beispielsweise $-COOCOCH_3$ in Frage. Die OMe-Gruppen sind vorzugsweise Alkalimetall- oder Erdalkalimetallphenolatgruppen.

Die Reaktionsbedingungen für das erfindungsgemäße Verfahren werden weitgehend von der Natur der Gruppen Z und Y bestimmt. So wird eine Carbonsäure mit einem Phenol in der Regel in Gegenwart einer starken Säure, beispielsweise einer Mineralsäure wie Salzsäure oder Schwefelsäure, umgesetzt. Eine bevorzugte Reaktionsweise ist die Umsetzung eines Säureanhydrids oder insbesondere eines Säurechlorids mit einem Phenol. Vorzugsweise werden diese Veresterungsreaktionen in einem basischen Milieu durchgeführt, wobei als Basen insbesondere Alkalimetallhydroxide wie Natrium- oder Kaliumhydroxid, Alkalimetallcarbonate bzw. -hydrogencarbonate wie Natriumcarbonat, Natriumhydrogencarbonat, Kaliumcarbonat oder Kaliumhydrogencarbonat, Alkalimetallacetate wie Natrium- oder Kaliumacetat, Erdalkalimetallhydroxide wie Calciumhydroxid oder organische Basen wie Triäthylamin, Pyridin, Lutidin, Kollidin oder Chinolin von Bedeutung sind.

Die Veresterungen werden vorteilhaft in Gegenwart eines inerten Lösungsmittels durchgeführt. Gut geeignet sind insbesondere Äther wie Diäthyläther, Di-n-butyläther, Tetrahydrofuran, Dioxan oder Anisol, Ketone wie Aceton, Butanon, Pentanon-(3) oder Cyclohexanon, Amide wie Dimethylformamid oder Hexamethylphosphorsäuretriamid, Kohlenwasserstoffe wie Benzol, Toluol oder Xylol, Halogenkohlenwasserstoffe wie Tetrachlorkohlenstoff oder Tetrachloräthylen und Sulfoxide wie Dimethylsulfoxid oder Sulfolan. Mit Wasser nicht mischbare Lösungsmittel können gleichzeitig vorteilhaft zum azeotropen Abdestillieren des bei der Veresterung gebildeten Wassers verwendet werden. Gelegentlich kann auch ein Überschuß einer verwendeten organischen Base, zum Beispiel Pyridin, Chinolin oder Triäthylamin, als Lösungsmittel für die Veresterung angewandt werden. Prinzipiell können die Veresterungsreaktionen nach der Erfindung in Abwesenheit eines Lösungsmittels, zum Beispiel durch einfaches Erhitzen der Komponenten in Gegenwart von Natriumacetat, durchgeführt werden.

Die Reaktionstemperatur liegt gewöhnlich zwischen —50° C und +250° C, vorzugsweise zwischen —20° C und +80° C. Bei diesen Temperaturen sind die Veresterungsreaktionen in der Regel nach 15 Minuten bis 48 Stunden beendet.

Eine weitere bevorzugte Ausführungsform des Verfahrens nach der Erfindung besteht darin, daß man das zu veresternde Phenol der Formel (III) zunächst in sein Natrium- oder Kaliumsalz überführt, zum Beispiel durch Behandeln mit äthanolischer Natron- oder Kalilauge, dieses Salz isoliert und zusammen mit Natriumhydrogenkarbonat oder Kaliumcarbonat unter Rühren in Aceton oder Diäthyläther suspendiert, und diese Suspension tropfenweise unter Rühren mit einer Lösung eines Säurechlorids oder Anhydrids der Formel (II) in Diäthyläther, Aceton oder Dimethylformamid versetzt. Dabei wird das Reaktionsgemisch auf einer Temperatur zwischen —25° C und +20° C, vorzugsweise bei —10° C bis —20° C gehalten. Bei dieser Arbeitsweise ist die Veresterungsreaktion gewöhnlich nach 15 bis 50 Minuten beendet.

Die Ausgangsmaterialien für das erfindungsgemäße Verfahren sind zum Teil in der Literatur beschrieben, die übrigen können ohne Schwierigkeiten auf die gleiche Weise wie die beschriebenen hergestellt werden.

Die erfindungsgemäßen Verbindungen besitzen in der Regel selbst eine nematische und/oder smektische Mesophase. Ihr Schmelzpunkt ist jedoch so hoch — meist über 50° C, oft sogar über 70° C —, daß sie allein nicht als flüssigkristalline Dielektrika für bei Raumtemperatur zu betreibende elektrooptische Anzeigeelemente in Frage kommen. Wenn die erfindungsgemäßen Verbindungen jedoch bekannten flüssigkristallinen Substanzen in Mengen von 0,5 bis 40 Gewichtsprozent (bezogen auf das Gesamtgewicht der fertigen Mischung) zugemischt werden, bewirken sie eine deutliche Erniedrigung des DKA-Werts. Dabei wird überraschenderweise auch durch verhältnismäßig große Zusatzmengen der erfindungsgemäßen Verbindungen die Viskosität des herzustellenden Dielektrikums nur geringfügig erhöht. Bevorzugt werden die erfindungsgemäßen Verbindungen den bekannten Basismaterialien flüssigkristalliner Dielektrika in Mengen von 1 bis 50, insbesondere von 5 bis 40 Gewichtsprozent zugemischt. Die zuzusetzende Menge wird dabei vom gewünschten Wert der DKA oder von der Löslichkeit der erfindungsgemäßen Verbindung(en) in dem Basismaterial bestimmt.

Als Basismaterialien der erfindungsgemäßen flüssigkristallinen Dielektrika kommen alle diejenigen in Frage, die auch bisher schon für diesen Zweck verwendet worden sind. Sie können daher außer flüssigkristallinen Verbindungen auch solche enthalten, die an sich nicht flüssigkristallinen sind, aber in Dielektrika für bestimmte Modifizierungen Verwendung finden. Die wichtigsten flüssigkristallinen Verbindungen, die als Basismaterialien der erfindungsgemäßen Dielektrika verwendet werden, lassen sich durch die Formel (IV) charakterisieren,

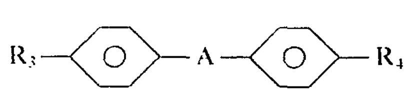

(IV)

worin A

—CH=CH—
—CH=CX—
—CX=CH—
—C≡C—
—N=N—
—N(O)=N—
—N=N(O)—
—CO—O—
—O—CO—
—CO—S—
—S—CO—
—CH=N—
—N=CH—
—CH=N(O)—
—N(O)=CH—

oder eine C—C-Einfachbindung bedeutet; wenn A —CO—O—, —O—CO— oder eine C—C-Einfachbindung bedeutet, kann einer der beiden Phenylringe auch durch einen trans-1,4-disubstituierten Cyclohexanring ersetzt sein.

X ist CN oder Halogen, vorzugsweise Cl.

$R_3$ und $R_4$ sind gleich oder verschieden und bedeuten Alkyl-, Alkoxy-, Alkanoyl-, Alkanoyloxy- oder Alkoxycarbonyloxy-gruppen, die bis zu 18, vorzugsweise bis zu 8 C-Atome enthalten. Bei den meisten dieser Verbindungen sind $R_3$ und $R_4$ vorzugsweise voneinander verschieden, wobei einer dieser Reste Alkyl oder Alkoxy ist. Ferner kann auch jeweils einer der Reste $R_3$ und $R_4$ —CN, —NC oder $—NO_2$ bedeuten. Eine große Zahl derartiger flüssigkristalliner Verbindungen ist kommerziell erhältlich.

Durch andere Zusätze als die der Formel (I) können die erfindungsgemäßen Dielektrika so modifiziert sein, daß sie in allen bisher bekanntgewordenen Flüssigkristall-Anzeigeelementen verwendet werden können. Derartige Zusätze sind dem Fachmann bekannt und sind in der einschlägigen Literatur ausführlich beschrieben. Beispielsweise können Substanzen zur Veränderung der Orientierung, der Leitfähigkeit und/oder zur Erhöhung der chemischen oder photochemischen Stabilität zugesetzt werden. Derartige Substanzen sind zum Beispiel in der DE-OS 2 209 127, 2 160 788 und 2 611 453 beschrieben. Die mögliche Anwesenheit solcher Substanzen ist von dem vorstehenden Begriff Basismaterialien als Bestandteil der erfindungsgemäßen Dielektrika umfaßt.

Die Herstellung der erfindungsgemäßen Dielektrika erfolgt in an sich üblicher Weise. In der Regel wird die gewünschte Menge einer oder mehrerer Verbindungen der Formel (I) in der bekannten flüssigkristallinen Substanz gelöst, zweckmäßig bei erhöhter Temperatur. Wenn dabei eine Temperatur oberhalb des Klärpunkts des Basismaterials gewählt wird, kann die Vollständigkeit des Lösevorgangs besonders leicht beobachtet werden. Es ist jedoch auch möglich, dem Basismaterial eine Lösung der zuzusetzenden Verbindung der Formel (I) in einem geeigneten organischen Lösungsmittel, zum Beispiel Aceton, Chloroform oder Methanol, zuzufügen und das Lösungsmittel nach gründlicher Durchmischung wieder zu entfernen, beispielsweise durch Destillation unter vermindertem Druck. Selbstverständlich muß bei dieser Verfahrensweise darauf geachtet werden, daß durch das Lösungsmittel keine weiteren, unter Umständen unerwünschten Dotierungsstoffe eingeschleppt werden.

Die folgenden Beispiele sollen die Erfindung erläutern, ohne sie zu begrenzen. Bei den angegebenen physikalischen Daten bedeutet F. den Schmelzpunkt einer Substanz, d. h. die Umwandlungstemperatur einer festen, kristallinen Phase in eine flüssige isotrope oder flüssigkristalline Phase, wobei die letztere smektisch oder nematisch sein kann. S./N. bedeutet den Umwandlungspunkt einer smektischen in eine nematische Phase, und K. ist der Klärpunkt der flüssigkristallinen Substanz, d. h. die Temperatur, bei der sich eine flüssigkristalline in eine isotrope flüssige Phase (oder umgekehrt) umwandelt. Prozentangaben sind, wenn nichts anderes angegeben ist, stets Gewichtsprozent.

## Beispiel 1

24,7 g 4-(4-n-Pentylcyclohexyl)-benzoesäure werden in 48 g Thionylchlorid 2 Stunden zum Sieden erhitzt. Das überschüssige Thionylchlorid wird abdestilliert und der Rückstand in 150 ml Toluol aufgenommen. Zu dieser Lösung wird eine Lösung von 21,7 g 2-Cyano-4-n-hetylphenol in 150 ml Toluol und 16 ml Pyridin gegeben und das Reaktionsgemisch 5 Stunden auf 80°C erwärmt. Nach dem Abkühlen wird das Reaktionsgemisch in 500 ml Wasser gegossen. Die organische Phase wird abgetrennt, je zweimal mit 200 ml 2 N Salzsäure und 100 ml Wasser gewaschen und dann über Natriumsulfat getrocknet. Nach Abdestillieren des Toluols wird der zurückbleibende 4-(4-n-Pentylcy-

clohexyl)-benzoesäure-2-cyano-4-n-hetylphenylester aus Äthanol umkristallisiert; F. 49,5° C. K. 114,5° C.

Analog werden hergestellt:

4-(4-Methylcyclohexyl)-benzoesäure-2-cyano-4-methylphenylester,
4-(4-Äthylcyclohexyl)-benzoesäure-2-cyano-4-methylphenylester,
4-(4-n-Propylcyclohexyl)-benzoesäure-2-cyano-4-methylphenylester,
4-(4-n-Butylcyclohexyl)-benzoesäure-2-cyano-4-methylphenylester,
4-(4-n-Pentylcyclohexyl)-benzoesäure-2-cyano-4-methylphenylester,
4-(4-n-Hexylcyclohexyl)-benzoesäure-2-cyano-4-methylphenylester,
4-(4-n-Heptylcyclohexyl)-benzoesäure-2-cyano-4-methylphenylester,
4-(4-n-Octylcyclohexyl)-benzoesäure-2-cyano-4-methylphenylester,
4-(4-n-Nonylcyclohexyl)-benzoesäure-2-cyano-4-methylphenylester,
4-(4-n-Decylcyclohexyl)-benzoesäure-2-cyano-4-methylphenylester,
4-[4-(2-Methylbutyl)-cyclohexyl]-benzoesäure-2-cyano-4-methylphenylester,
4-[4-(3-Methylbutyl)-cyclohexyl]-benzoesäure-4-cyano-4-methylphenylester,
4-[4-(1-Methylpentyl)-cyclohexyl]-benzoesäure-2-cyano-4-methylphenylester,
4-[4-(2-Äthylhexyl)-cyclohexyl]-benzoesäure-2-cyano-4-methylphenylester,
4-(4-Methylcyclohexyl)-benzoesäure-2-cyano-4-äthylphenylester,
4-(4-Äthylcyclohexyl)-benzoesäure-2-cyano-4-äthylphenylester,
4-(4-n-Propylcyclohexyl)-benzoesäure-2-cyano-4-äthylphenylester, F. 68° C, K. 63,5° C;
4-(4-n-Butylcyclohexyl)-benzoesäure-2-cyano-4-äthylphenylester, F. 61,5° C, K. 103° C;
4-(4-n-Pentylcyclohexyl)-benzoesäure-2-cyano-4-äthylphenylester, F. 62,3° C, K. 112,6° C;
4-(4-n-Hexylcyclohexyl)-benzoesäure-2-cyano-4-äthylphenylester,
4-(4-n-Heptylcyclohexyl)-benzoesäure-2-cyano-4-äthylphenylester,
4-(4-n-Octylcyclohexyl)-benzoesäure-2-cyano-4-äthylphenylester,
4-(4-n-Nonylcyclohexyl)-benzoesäure-2-cyano-4-äthylphenylester,
4-(4-n-Decylcyclohexyl)-benzoesäure-2-cyano-4-äthylphenylester,
4-[4-(2-Methylbutyl)-cyclohexyl]-benzoesäure-2-cyano-4-äthylphenylester,
4-[4-(3-Methylbutyl)-cyclohexyl]-benzoesäure-2-cyano-4-äthylphenylester,
4-[4-(1-(1-Methylpentyl)-cyclohexyl]-benzoesäure-2-cyano-4-äthylphenylester,
4-[4-(2-Äthylhexyl)-cyclohexyl]-benzoesäure-2-cyano-4-äthylphenylester,
4-(4-Methylcyclohexyl)-benzoesäure-2-cyano-4-n-propylphenylester,
4-(4-Äthylcyclohexyl)-benzoesäure-2-cyano-4-n-propylphenylester,
4-(4-n-Propylcyclohexyl)-benzoesäure-2-cyano-4-n-propylphenylester, F. 87,3° C, K. 119° C;
4-(4-n-Butylcyclohexyl)-benzoesäure-2-cyano-4-n-propylphenylester, F. 72° C, K. 113° C;
4-(4-n-Pentylcyclohexyl)-benzoesäure-2-cyano-4-n-propylphenylester,
4-(4-n-Hexylcyclohexyl)-benzoesäure-2-cyano-4-n-propylphenylester,
4-(4-n-Heptylcyclohexyl)-benzoesäure-2-cyano-4-n-propylphenylester,
4-(4-n-Octylcyclohexyl)-benzoesäure-2-cyano-4-n-propylphenylester,
4-(4-n-Nonylcyclohexyl)-benzoesäure-2-cyano-4-n-propylphenylester,
4-(4-n-Decylcyclohexyl)-benzoesäure-2-cyano-4-n-propylphenylester,
4-[4-(2-Methylbutyl)-cyclohexyl)-benzoesäure-2-cyano-4-n-propylphenylester,
4-[4-(3-Methylbutyl)-cyclohexyl]-benzoesäure-2-cyano-4-n-propylphenylester,
4-[4-(1-Methylpentyl)-cyclohexyl]-benzoesäure-2-cyano-4-n-propylphenylester,
4-[4-(2-Äthylhexyl)-cyclohexyl]-benzoesäure-2-cyano-4-n-propylphenylester,
4-(4-Methylcyclohexyl)-benzoesäure-2-cyano-4-n-butylphenylester,
4-(4-Äthylcyclohexyl)-benzoesäure-2-cyano-4-n-butylphenylester,
4-(4-n-Propylcyclohexyl)-benzoesäure-2-cyano-4-n-butylphenylester, F. 56° C, K, 113° C;
4-(4-n-Butylcyclohexyl)-benzoesäure-2-cyano-4-n-butylphenylester, F. 60° C, K. 108° C;
4-(4-n-Pentylcyclohexyl)-benzoesäure-2-cyano-4-n-butylphenylester, F. 50° C, K. 115° C;
4-(4-n-Hexylcyclohexyl)-benzoesäure-2-cyano-4-n-butylphenylester,
4-(4-n-Heptylcyclohexyl)-benzoesäure-2-cyano-4-n-butylphenylester,
4-(4-n-Octylcyclohexyl)-benzoesäure-2-cyano-4-n-butylphenylester,
4-(4-n-Nonylcyclohexyl)-benzoesäure-2-cyano-4-n-butylphenylester,
4-(4-n-Decylcyclohexyl)-benzoesäure-2-cyano-4-n-butylphenylester,
4-[4-(2-Methylbutyl)-cyclohexyl]-benzoesäure-2-cyano-4-n-butylphenylester,
4-[4-(3-Methylbutyl)-cyclohexyl]-benzoesäure-2-cyano-4-n-butylphenylester,
4-[4-(1-Methylpentyl)-cyclohexyl]-benzoesäure-2-cyano-4-n-butylphenylester,
4-[4-(2-Äthylhexyl)-cyclohexyl]-benzoesäure-2-cyano-4-n-butylphenylester,
4-(4-Methylcyclohexyl)-benzoesäure-2-cyano-4-n-pentylphenylester,
4-(4-Äthylcyclohexyl)-benzoesäure-2-cyano-4-n-pentylphenylester,
4-(4-n-Propylcyclohexyl)-benzoesäure-2-cyano-4-n-pentylphenylester, F. 57° C, K. 111° C;
4-(4-n-Butylcyclohexyl)-benzoesäure-2-cyano-4-n-pentylphenylester, F. 54° C, K. 107° C;
4-(4-n-Pentylcyclohexyl)-benzoesäure-2-cyano-4-n-pentylphenylester, F. 59° C, K. 113° C;

4-(4-n-Hexylcyclohexyl)-benzoesäure-2-cyano-4-n-pentylphenylester,
4-(4-n-Heptylcyclohexyl)-benzoesäure-2-cyano-4-n-pentylphenylester,
4-(4-n-Octylcyclohexyl)-benzoesäure-2-cyano-4-n-pentylphenylester,
4-(4-n-Nonylcyclohexyl)-benzoesäure-2-cyano-4-n-pentylphenylester,
4-(4-n-Decylcyclohexyl)-benzoesäure-2-cyano-4-n-pentylphenylester,
4-[4-(2-Methylbutyl)-cyclohexyl]-benzoesäure-2-cyano-4-n-pentylphenylester,
4-[4-(3-Methylbutyl)-cyclohexyl]-benzoesäure-2-cyano-4-n-pentylphenylester,
4-[4-(1-Methylpentyl)-cyclohexyl]-benzoesäure-2-cyano-4-n-pentylphenylester,
4-[4-(2-Äthylhexyl)-cyclohexyl]-benzoesäure-2-cyano-4-n-pentylphenylester,
4-(4-Methylcyclohexyl)-benzoesäure-2-cyano-4-n-hexylphenylester,
4-(4-Äthylcyclohexyl)-benzoesäure-2-cyano-4-n-hexylphenylester,
4-(4-n-Propylcyclohexyl)-benzoesäure-2-cyano-4-n-hexylphenylester,
4-(4-n-Butylcyclohexyl)-benzoesäure-2-cyano-4-n-hexylphenylester,
4-(4-n-Pentylcyclohexyl)-benzoesäure-2-cyano-4-n-hexylphenylester,
4-(4-n-Hexylcyclohexyl)-benzoesäure-2-cyano-4-n-hexylphenylester,
4-(4-n-Heptylcyclohexyl)-benzoesäure-2-cyano-4-n-hexylphenylester,
4-(4-n-Octylcyclohexyl)-benzoesäure-2-cyano-4-n-hexylphenylester,
4-(4-n-Nonylcyclohexyl)-benzoesäure-2-cyano-4-n-hexylphenylester,
4-(4-n-Decylcyclohexyl)-benzoesäure-2-cyano-4-n-hexylphenylester,
4-[4-(2-Methylbutyl)-cyclohexyl]-benzoesäure-2-cyano-4-n-hexylphenylester,
4-[4-(3-Methylbutyl)-cyclohexyl]-benzoesäure-2-cyano-4-n-hexylphenylester,
4-[4-(1-Methylpentyl)-cyclohexyl]-benzoesäure-2-cyano-4-n-hexylphenylester,
4-[4-(2-Äthylhexyl)-cyclohexyl]-benzoesäure-2-cyano-4-n-hexylphenylester,
4-(4-Methylcyclohexyl)-benzoesäure-2-cyano-4-n-heptylphenylester,
4-(4-Äthylcyclohexyl)-benzoesäure-2-cyano-4-n-heptylphenylester,
4-(4-n-Propylcyclohexyl)-benzoesäure-2-cyano-4-n-heptylphenylester, F. 60° C, K. 111° C;
4-(4-n-Butylcyclohexyl)-benzoesäure-2-cyano-4-n-heptylphenylester, F. 48° C, K. 108,5°;
4-(4-n-Hexylcyclohexyl)-benzoesäure-2-cyano-4-n-heptylphenylester,
4-(4-n-Heptylcyclohexyl)-benzoesäure-2-cyano-4-n-heptylphenylester, F. 58°, K, 110,5° C;
4-(4-n-Octylcyclohexyl)-benzoesäure-2-cyano-4-n-heptylphenylester,
4-(4-n-Nonylcyclohexyl)-benzoesäure-2-cyano-4-n-heptylphenylester,
4-(4-n-Decylcyclohexyl)-benzoesäure-2-cyano-4-n-heptylphenylester,
4-[4-(2-Methylbutyl)-cyclohexyl]-benzoesäure-2-cyano-4-n-heptylphenylester,
4-[4-(3-Methylbutyl)-cyclohexyl]-benzoesäure-2-cyano-4-n-heptylphenylester,
4-[4-(1-Methylpentyl)-cyclohexyl]-benzoesäure-2-cyano-4-n-heptylphenylester,
4-[4-(2-Äthylhexyl)-cyclohexyl]-benzoesäure-2-cyano-4-n-heptylphenylester,
4-(4-Methylcyclohexyl)-benzoesäure-2-cyano-4-n-octylphenylester,
4-(4-Äthylcyclohexyl)-benzoesäure-2-cyano-4-n-octylphenylester,
4-(4-n-Propylcyclohexyl)-benzoesäure-2-cyano-4-n-octylphenylester,
4-(4-n-Butylcyclohexyl)-benzoesäure-2-cyano-4-n-octylphenylester,
4-(4-n-Phenylcyclohexyl)-benzoesäure-2-cyano-4-octylphenylester,
4-(4-n-Hexylcyclohexyl)-benzoesäure-2-cyano-4-n-octylphenylester,
4-(4-n-Heptylcyclohexyl)-benzoesäure-2-cyano-4-n-octylphenylester,
4-(4-n-Octylcyclohexyl)-benzoesäure-2-cyano-4-n-octylphenylester,
4-(4-n-Nonylcyclohexyl)-benzoesäure-2-cyano-4-n-octylphenylester,
4-(4-n-Decylcyclohexyl)-benzoesäure-2-cyano-4-n-octylphenylester,
4-[4-(2-Methylbutyl)-cyclohexyl]-benzoesäure-2-cyano-4-n-octylphenylester,
4-[4-(3-Methylbutyl)-cyclohexyl]-benzoesäure-2-cyano-4-n-octylphenylester,
4-[4-(1-Methylpentyl)-cyclohexyl]-benzoesäure-2-cyano-4-n-octylphenylester,
4-[4-(2-Äthylhexyl)-cyclohexyl]-benzoesäure-2-cyano-4-n-octylphenylester,
4-(4-Methylcyclohexyl)-benzoesäure-2-cyano-4-n-nonylphenylester,
4-(4-Äthylcyclohexyl)-benzoesäure-2-cyano-4-n-nonylphenylester,
4-(4-n-Propylcyclohexyl)-benzoesäure-2-cyano-4-n-nonylphenylester,
4-(4-n-Butylcyclohexyl)-benzoesäure-2-cyano-4-n-nonylphenylester,
4-(4-n-Pentylcyclohexyl)-benzoesäure-2-cyano-4-n-nonylphenylester,
4-(4-n-Hexylcyclohexyl)-benzoesäure-2-cyano-4-n-nonylphenylester,
4-(4-n-Heptylcyclohexyl)-benzoesäure-2-cyano-4-n-nonylphenylester,
4-(4-n-Octylcyclohexyl)-benzoesäure-2-cyano-4-n-nonylphenylester,
4-(4-n-Nonylcyclohexyl)-benzoesäure-2-cyano-4-n-nonylphenylester,
4-(4-n-Decylcyclohexyl)-benzoesäure-2-cyano-4-n-nonylphenylester,
4-[4-(2-Methylbutyl)-cyclohexyl]-benzoesäure-2-cyano-4-n-nonylphenylester,
4-[4-(3-Methylbutyl)-cyclohexyl]-benzoesäure-2-cyano-4-n-nonylphenylester,
4-[4-(1-Methylpentyl)-cyclohexyl]-benzoesäure-2-cyano-4-n-nonylphenylester,
4-[4-(2-Äthylhexyl)-cyclohexyl]-benzoesäure-2-cyano-4-n-nonylphenylester,
4-(4-Methylcyclohexyl)-benzoesäure-2-cyano-4-n-decylphenylester,

4-(4-Äthylcyclohexyl)-benzoesäure-2-cyano-4-n-decylphenylester,
4-(4-n-Propylcyclohexyl)-benzoesäure-2-cyano-4-n-decylphenylester,
4-(4-n-Butylcyclohexyl)-benzoesäure-2-cyano-4-n-decylphenylester,
4-(4-n-Pentylcyclohexyl)-benzoesäure-2-cyano-4-n-decylphenylester,
4-(4-n-Hexylcyclohexyl)-benzoesäure-2-cyano-4-n-decylphenylester,
4-(4-n-Heptylcyclohexyl)-benzoesäure-2-cyano-4-n-decylphenylester,
4-(4-n-Octylcyclohexyl)-benzoesäure-2-cyano-4-n-decylphenylester,
4-(4-n-Nonylcyclohexyl)-benzoesäure-2-cyano-4-n-decylphenylester,
4-(4-n-Decylcyclohexyl)-benzoesäure-2-cyano-4-n-decylphenylester,
4-[4-(2-Methylbutyl)-cyclohexyl]-benzoesäure-2-cyano-4-n-decylphenylester,
4-[4-(3-Methylbutyl)-cyclohexyl]-benzoesäure-2-cyano-4-n-decylphenylester,
4-[4-(1-Methylpentyl)-cyclohexyl]-benzoesäure-2-cyano-4-n-decylphenylester,
4-[4-(2-Äthylhexyl)-cyclohexyl]-benzoesäure-2-cyano-4-n-decylphenylester,
4-(4-Methylcyclohexyl)-benzoesäure-2-cyano-4-(2-methylbutyl)-phenylester,
4-(4-Äthylcyclohexyl)-benzoesäure-2-cyano-4-(2-methylbutyl)-phenylester,
4-(4-n-Propylcyclohexyl)-benzoesäure-2-cyano-4-(2-methylbutyl)-phenylester,
4-(4-n-Butylcyclohexyl)-benzoesäure-2-cyano-4-(2-methylbutyl)-phenylester,
4-(4-n-Pentylcyclohexyl)-benzoesäure-2-cyano-4-(2-methylbutyl)-phenylester,
4-(4-n-Hexylcyclohexyl)-benzoesäure-2-cyano-4-(2-methylbutyl)-phenylester,
4-(4-n-Heptylcyclohexyl)-benzoesäure-2-cyano-4-(2-methylbutyl)-phenylester,
4-(4-n-Octylcyclohexyl)-benzoesäure-2-cyano-4-(2-methylbutyl)-phenylester,
4-(4-n-Nonylcyclohexyl)-benzoesäure-2-cyano-4-(2-methylbutyl)-phenylester,
4-(4-n-Decylcyclohexyl)-benzoesäure-2-cyano-4-(2-methylbutyl)-phenylester,
4-(4-Methylcyclohexyl)-benzoesäure-2-cyano-4-(3-methylbutyl)-phenylester,
4-(4-Äthylcyclohexyl)-benzoesäure-2-cyano-4-(3-methylbutyl)-phenylester,
4-(4-n-Propylcyclohexyl)-benzoesäure-2-cyano-4-(3-methylbutyl)-phenylester,
4-(4-n-Butylcyclohexyl)-benzoesäure-2-cyano-4-(3-methylbutyl)-phenylester,
4-(4-n-Pentylcyclohexyl-benzoesäure-2-cyano-4-(3-methylbutyl)-phenylester,
4-(4-n-Hexylcyclohexyl)-benzoesäure-2-cyano-4-(3-methylbutyl)-phenylester,
4-(4-n-Heptylcyclohexyl)-benzoesäure-2-cyano-4-(3-methylbutyl)-phenylester,
4-(4-n-Octylcyclohexyl)-benzoesäure-2-cyano-4-(3-methylbutyl)-phenylester,
4-(4-n-Nonylcyclohexyl)-benzoesäure-2-cyano-4-(3-methylbutyl)-phenylester,
4-(4-n-Decylcyclohexyl)-benzoesäure-2-cyano-4-(3-methylbutyl)-phenylester,
4-(4-Methylcyclohexyl)-benzoesäure-2-cyano-4-(1-methylpentyl)-phenylester,
4-(4-Äthylcyclohexyl)-benzoesäure-2-cyano-4-(1-methylpentyl)-phenylester,
4-(4-n-Propylcyclohexyl)-benzoesäure-2-cyano-4-(1-methylpentyl)-phenylester,
4-(4-n-Butylcyclohexyl)-benzoesäure-2-cyano-4-(1-methylpentyl)-phenylester,
4-(4-n-Pentylcyclohexyl)-benzoesäure-2-cyano-4-(1-methylpentyl)-phenylester,
4-(4-n-Hexylcyclohexyl)-benzoesäure-2-cyano-4-(1-methylpentyl)-phenylester,
4-(4-n-Heptylcyclohexyl)-benzoesäure-2-cyano-4-(1-methylpentyl)-phenylester,
4-(4-n-Octylcyclohexyl)-benzoesäure-2-cyano-4-(1-methylpentyl)-phenylester,
4-(4-n-Nonylcyclohexyl)-benzoesäure-2-cyano-4-(1-methylpentyl)-phenylester,
4-(4-n-Decylcyclohexyl)-benzoesäure-2-cyano-4-(1-methylpentyl)-phenylester,
4-(4-Methylcyclohexyl)-benzoesäure-2-cyano-4-(2-methylpropyl)-phenylester,
4-(4-Äthylcyclohexyl)-benzoesäure-2-cyano-4-(2-methylpropyl)-phenylester,
4-(4-n-Propylcyclohexyl)-benzoesäure-2-cyano-4-(2-methylpropyl)-phenylester,
4-(4-n-Butylcyclohexyl)-benzoesäure-2-cyano-4-(2-methylpropyl)-phenylester,
4-(4-n-Pentylcyclohexyl)-benzoesäure-2-cyano-4-(2-methylpropyl)-phenylester,
4-(4-n-Hexylcyclohexyl)-benzoesäure-2-cyano-4-(2-methylpropyl)-phenylester,
4-(4-n-Heptylcyclohexyl)-benzoesäure-2-cyano-4-(2-methylpropyl)-phenylester,
4-(4-n-Octylcyclohexyl)-benzoesäure-2-cyano-4-(2-methylpropyl)-phenylester,
4-(4-n-Nonylcyclohexyl)-benzoesäure-2-cyano-4-(2-methylpropyl)-phenylester,
4-(4-n-Decylcyclohexyl)-benzoesäure-2-cyano-4-(2-methylpropyl)-phenylester.

## Beispiel 2

(a) In eine Suspension von 568 g wasserfreiem Aluminiumchlorid in 600 ml Dichlormethan wird unter Rühren bei −10° C bis −5° C eine Lösung von 233 g Valeriansäurechlorid in 300 ml Dichlormethan eingetragen. Anschließend wird bei −10° C eine Lösung von 390 g trans-4-Acetyl-1-phenylcyclohexan in 500 ml Dichlormethan zugefügt. Das Reaktionsgemisch wird noch 1 Stunde bei −10° C gerührt und dann in 10 l Eiswasser gegossen. Die organische Phase wird abgetrennt, mehrmals mit Wasser gewaschen, getrocknet und eingedampft. Das zurückbleibende 4-(trans-4-Acetylcyclohexyl)-valerophenon wird aus Petroleumbenzin (Kp. 50 − 70° C) umkristallisiert; F. 74 − 76° C.

(b) 407 g 4-(trans-4-Acetylcyclohexyl)-valerophenon werden in 2,5 l Äthanol gelöst und in Gegenwart

von 25 g Palladium-Aktivkohle-Katalysator (10 Gew.-% Pd) bei Raumtemperatur und Normaldruck hydriert. Anschließend wird vom Katalysator abfiltriert, eingedampft und das zurückbleibende 4-(trans-4-Acetylcyclohexyl)-1-n-pentylbenzol aus Äthanol umkristallisiert; F. 29 – 31° C.

(c) In eine Lösung von 396 g Brom und 327 g Natriumhydroxid in 1,6 l Wasser wird bei 15° C eine Lösung von 225 g 4-(trans-4-Acetylcyclohexyl)-1-n-pentylbenzol in 2,7 l Dioxan eingetragen. Die entstandene Suspension wird noch 5 Stunden bei Raumtemperatur gerührt und dann mit 6 l Diäthyläther versetzt. Die organische Phase wird abgetrennt und zweimal mit je 2 l Wasser gewaschen. Die vereinigten wässerigen Phasen werden mit 2N Salzsäure neutralisiert; die dabei ausfallende 4-trans-(4-n-Pentylphenyl)-cyclohexancarbonsäure wird abfiltriert, mit Wasser gewaschen und aus Äthanol umkristallisiert; F. 185° C, K. 196° C.

(d) 24,7 g 4-trans-(4-n-Pentylphenyl)-cyclohexancarbonsäure werden analog Beispiel 1 in 4-trans-(4-n-Pentylphenyl)-cyclohexancarbonsäuredichlorid überführt und in Toluol in Gegenwart von Pyridin mit 17,5 g 2-Cyano-4-n-butylphenol verestert. Nach der wie in Beispiel 1 durchgeführten Aufarbeitung wird der zurückbleibende 4-trans-(4-n-Pentylphenyl)-cyclohexancarbonsäure-2-cyano-4-n-butylphenylester aus Äthanol umkristallisiert; F. 51° C, K. 50,5° C.

Analog werden hergestellt:

4-trans-(4-Methylphenyl)-cyclohexancarbonsäure-2-cyano-4-methylphenylester,
4-trans-(4-Äthylphenyl)-cyclohexancarbonsäure-2-cyano-4-methylphenylester,
4-trans-(4-n-Propylphenyl)-cyclohexancarbonsäure-2-cyano-4-methylphenylester,
4-trans-(4-n-Butylphenyl)-cyclohexancarbonsäure-2-cyano-4-methylphenylester,
4-trans-(4-n-Pentylphenyl)-cyclohexancarbonsäure-2-cyano-4-methylphenylester,
4-trans-(4-n-Hexylphenyl)-cyclohexancarbonsäure-2-cyano-4-methylphenylester,
4-trans-(4-n-Heptylphenyl)-cyclohexancarbonsäure-2-cyano-4-methylphenylester,
4-trans-(4-n-Octylphenyl)-cyclohexancarbonsäure-2-cyano-4-methylphenylester,
4-trans-(4-n-Octylphenyl)-cyclohexancarbonsäure-2-cyano-4-methylphenylester,
4-trans-(4-n-Decylphenyl)-cyclohexancarbonsäure-2-cyano-4-methylphenylester,
4-trans-[4-(2-Methylpropyl)-phenyl]-cyclohexancarbonsäure-2-cyano-4-methylphenylester,
4-trans-[4-(2-Methylbutyl)-phenyl]-cyclohexancarbonsäure-2-cyano-4-methylphenylester,
4-trans-[4-(3-Methylbutyl)-phenyl]-cyclohexancarbonsäure-2-cyano-4-methylphenylester,
4-trans-[4-(2-Methylheptyl)-phenyl]-cyclohexancarbonsäure-2-cyano-4-methylphenylester,
4-trans-(4-Methylphenyl)-cyclohexancarbonsäure-2-cyano-4-äthylphenylester,
4-trans-(4-Äthylphenyl)-cyclohexancarbonsäure-2-cyano-4-äthylphenylester,
4-trans-(4-n-Propylphenyl)-cyclohexancarbonsäure-2-cyano-4-äthylphenylester,
4-trans-(4-n-Butylphenyl)-cyclohexancarbonsäure-2-cyano-4-äthylphenylester,
4-trans-(4-n-Pentylphenyl)-cyclohexancarbonsäure-2-cyano-4-äthylphenylester,
4-trans-(4-n-Hexylphenyl)-cyclohexancarbonsäure-2-cyano-4-äthylphenylester,
4-trans-(4-n-Heptylphenyl)-cyclohexancarbonsäure-2-cyano-4-äthylphenylester,
4-trans-(4-n-Octylphenyl)-cyclohexancarbonsäure-2-cyano-4-äthylphenylester,
4-trans-(4-n-Nonylphenol)-cyclohexancarbonsäure-2-cyano-4-äthylphenylester,
4-trans-(4-n-Decylphenyl)-cyclohexancarbonsäure-2-cyano-4-äthylphenylester,
4-trans-[4-(2-Methylpropyl)-phenyl]-cyclohexancarbonsäure-2-cyano-4-äthylphenylester,
4-trans-[4-(2-Methylbutyl)-phenyl]-cyclohexancarbonsäure-2-cyano-4-äthylphenylester,
4-trans-[4-(3-Methylbutyl)-phenyl]-cyclohexancarbonsäure-2-cyano-4-äthylphenylester,
4-trans-[4-(2-Methylheptyl)-phenyl]-cyclohexancarbonsäure-2-cyano-4-äthylphenylester,
4-trans-(4-Methylphenyl)-cyclohexancarbonsäure-2-cyano-4-n-propylphenylester,
4-trans-(4-Äthylphenyl)-cyclohexancarbonsäure-2-cyano-4-n-propylphenylester,
4-trans-(4-n-Propylphenyl)-cyclohexancarbonsäure-2-cyano-4-n-propylphenylester,
4-trans-(4-n-Butylphenyl)-cyclohexancarbonsäure-2-cyano-4-n-propylphenylester,
4-trans-(4-n-Pentylphenyl)-cyclohexancarbonsäure-2-cyano-4-n-propylphenylester,
4-trans-(4-n-Hexylphenyl)-cyclohexancarbonsäure-2-cyano-4-n-propylphenylester,
4-trans-(4-n-Heptylphenyl)-cyclohexancarbonsäure-2-cyano-4-n-propylphenylester,
4-trans-(4-n-Octylphenyl)-cyclohexancarbonsäure-2-cyano-4-n-propylphenylester,
4-trans-(4-n-Nonylphenyl)-cyclohexancarbonsäure-2-cyano-4-n-propylphenylester,
4-trans-(4-n-Decylphenyl)-cyclohexancarbonsäure-2-cyano-4-n-propylphenylester,
4-trans-[4-(2-Methylpropyl)-phenyl]-cyclohexancarbonsäure-2-cyano-4-n-propylphenylester,
4-trans-[4-(2-Methylbutyl)-phenyl]-cyclohexancarbonsäure-2-cyano-4-n-propylphenylester,
4-trans-[4-(3-Methylbutyl)-phenyl]-cyclohexancarbonsäure-2-cyano-4-n-propylphenylester,
4-trans-[4-(2-Methylheptyl)-phenyl]-cyclohexancarbonsäure-2-cyano-4-n-propylphenylester,
4-trans-(4-Methylphenyl)-cyclohexancarbonsäure-2-cyano-4-n-butylphenylester,
4-trans-(4-Äthylphenyl)-cyclohexancarbonsäure-2-cyano-4-n-butylphenylester,
4-trans-(4-n-Propylphenyl)-cyclohexancarbonsäure-2-cyano-4-n-butylphenylester,
4-trans-(4-n-Butylphenyl)-cyclohexancarbonsäure-2-cyano-4-n-butylphenylester,
4-trans-(4-n-Hexylphenyl)-cyclohexancarbonsäure-2-cyano-4-n-butylphenylester,

4-trans-(4-n-Heptylphenyl)-cyclohexancarbonsäure-2-cyano-4-n-butylphenylester,
4-trans-(4-n-Octylphenyl)-cyclohexancarbonsäure-2-cyano-4-n-butylphenylester,
4-trans-(4-n-Nonylphenyl)-cyclohexancarbonsäure-2-cyano-4-n-butylphenylester,
4-trans-(4-n-Decylphenyl)-cyclohexancarbonsäure-2-cyano-4-n-butylphenylester,
4-trans-[4-(2-Methylpropyl)-phenyl]-cyclohexancarbonsäure-2-cyano-4-n-butylphenylester,
4-trans-[4-(2-Methylbutyl)-phenyl]-cyclohexancarbonsäure-2-cyano-4-n-butylphenylester,
4-trans-[4-(3-Methylbutyl)-phenyl]-cyclohexancarbonsäure-2-cyano-4-n-butylphenylester,
4-trans-[4-(2-Methylheptyl)-phenyl]-cyclohexancarbonsäure-2-cyano-4-n-butylphenylester,
4-trans-(4-Methylphenyl)-cyclohexancarbonsäure-2-cyano-4-n-pentylphenylester,
4-trans-(4-Äthylphenyl)-cyclohexancarbonsäure-2-cyano-4-n-pentylphenylester,
4-trans-(4-n-Propylphenyl)-cyclohexancarbonsäure-2-cyano-4-n-pentylphenylester,
4-trans-(4-n-Butylphenyl)-cyclohexancarbonsäure-2-cyano-4-n-pentylphenylester,
4-trans-(4-n-Pentylphenyl)-cyclohexancarbonsäure-2-cyano-4-n-pentylphenylester,
4-trans-(4-n-Hexylphenyl)-cyclohexancarbonsäure-2-cyano-4-n-pentylphenylester,
4-trans-(4-n-Heptylphenyl)-cyclohexancarbonsäure-2-cyano-4-n-pentylphenylester,
4-trans-(4-n-Octylphenyl)-cyclohexancarbonsäure-2-cyano-4-n-pentylphenylester,
4-trans-(4-n-Nonylphenyl)-cyclohexancarbonsäure-2-cyano-4-n-pentylphenylester,
4-trans-(4-n-Decylphenyl)-cyclohexancarbonsäure-2-cyano-4-n-pentylphenylester,
4-trans-[4-(2-Methylpropyl)-phenyl]-cyclohexancarbonsäure-2-cyano-4-n-pentylphenylester,
4-trans-[4-(2-Methylbutyl)-phenyl]-cyclohexancarbonsäure-2-cyano-4-n-pentylphenylester,
4-trans-[4-(3-Methylbutyl)-phenyl]-cyclohexancarbonsäure-2-cyano-4-n-pentylphenylester,
4-trans-[4-(2-Methylheptyl)-phenyl]-cyclohexancarbonsäure-2-cyano-4-n-pentylphenylester,
4-trans-(4-Methylphenyl)-cyclohexancarbonsäure-2-cyano-4-n-hexylphenylester,
4-trans-(4-Äthylphenyl)-cyclohexancarbonsäure-2-cyano-4-n-hexylphenylester,
4-trans-(4-n-Propylphenyl)-cyclohexancarbonsäure-2-cyano-4-n-hexylphenylester,
4-trans-(4-n-Butylphenyl)-cyclohexancarbonsäure-2-cyano-4-n-hexylphenylester,
4-trans-(4-n-Pentylphenyl)-cyclohexancarbonsäure-2-cyano-4-n-hexylphenylester,
4-trans-(4-n-Hexylphenyl)-cyclohexancarbonsäure-2-cyano-4-n-hexylphenylester,
4-trans-(4-n-Heptylphenyl)-cyclohexancarbonsäure-2-cyano-4-n-hexylphenylester,
4-trans-(4-n-Octylphenyl)-cyclohexancarbonsäure-2-cyano-4-n-hexylphenylester,
4-trans-(4-n-Nonylphenyl)-cyclohexancarbonsäure-2-cyano-4-n-hexylphenylester,
4-trans-(4-n-Decylphenyl)-cyclohexancarbonsäure-2-cyano-4-n-hexylphenylester,
4-trans-[4-(2-Methylpropyl)-phenyl]-cyclohexancarbonsäure-2-cyano-4-n-hexylphenylester,
4-trans-[4-(2-Methylbutyl)-phenyl]-cyclohexancarbonsäure-2-cyano-4-n-hexylphenylester,
4-trans-[4-(3-Methylbutyl)-phenyl]-cyclohexancarbonsäure-2-cyano-4-n-hexylphenylester,
4-trans-[4-(2-Methylheptyl)-phenyl]-cyclohexancarbonsäure-2-cyano-4-n-hexylphenylester,
4-trans-(4-Methylphenyl)-cyclohexancarbonsäure-2-cyano-4-n-heptylphenylester,
4-trans-(4-Äthylphenyl)-cyclohexancarbonsäure-2-cyano-4-n-heptylphenylester,
4-trans-(4-n-Propylphenyl)-cyclohexancarbonsäure-2-cyano-4-n-heptylphenylester,
4-trans-(4-n-Butylphenyl)-cyclohexancarbonsäure-2-cyano-4-n-heptylphenylester,
4-trans-(4-n-Pentylphenyl)-cyclohexancarbonsäure-2-cyano-4-n-heptylphenylester,
F. 73,5° C, K. 63,5° C;
4-trans-(4-n-Hexylphenyl)-cyclohexancarbonsäure-2-cyano-4-n-heptylphenylester,
4-trans-(4-n-Heptylphenyl)-cyclohexancarbonsäure-2-cyano-4-n-heptylphenylester,
4-trans-(4-n-Octylphenyl)-cyclohexancarbonsäure-2-cyano-4-n-heptylphenylester,
4-trans-(4-n-Nonylphenyl)-cyclohexancarbonsäure-2-cyano-4-n-heptylphenylester,
4-trans-(4-n-Decylphenyl)-cyclohexancarbonsäure-2-cyano-4-n-heptylphenylester,
4-trans-[4-(2-Methylpropyl)-phenyl]-cyclohexancarbonsäure-2-cyano-4-n-heptylphenylester,
4-trans-[4-(2-Methylbutyl)-phenyl]-cyclohexancarbonsäure-2-cyano-4-n-heptylphenylester,
4-trans-[4-(3-Methylbutyl)-phenyl]-cyclohexancarbonsäure-2-cyano-4-n-heptylphenylester,
4-trans-[4-(2-Methylheptyl)-phenyl]-cyclohexancarbonsäure-2-cyano-4-n-heptylphenylester,
4-trans-(4-Methylphenyl)-cyclohexancarbonsäure-2-cyano-4-n-octylphenylester,
4-trans-(4-Äthylphenyl)-cyclohexancarbonsäure-2-cyano-4-n-octylphenylester,
4-trans-(4-n-Propylphenyl)-cyclohexancarbonsäure-2-cyano-4-n-octylphenylester,
4-trans-(4-n-Butylphenyl)-cyclohexancarbonsäure-2-cyano-4-n-octylphenylester,
4-trans-(4-n-Pentylphenyl)-cyclohexancarbonsäure-2-cyano-4-n-octylphenylester,
4-trans-(4-n-Hexylphenyl)-cyclohexancarbonsäure-2-cyano-4-n-octylphenylester,
4-trans-(4-n-Heptylphenyl)-cyclohexancarbonsäure-2-cyano-4-n-octylphenylester,
4-trans-(4-n-Octylphenyl)-cyclohexancarbonsäure-2-cyano-4-n-octylphenylester,
4-trans-(4-n-Nonylphenyl)-cyclohexancarbonsäure-2-cyano-4-n-octylphenylester,
4-trans-(4-n-Decylphenyl)-cyclohexancarbonsäure-2-cyano-4-n-octylphenylester,
4-trans-[4-(2-Methylpropyl)-phenyl]-cyclohexancarbonsäure-2-cyano-4-n-octylphenylester,
4-trans-[4-(2-Methylbutyl)-phenyl]- cyclohexancarbonsäure-2-cyano-4-n-octylphenylester,
4-trans-[4-(3-Methylbutyl)-phenyl]-cyclohexancarbonsäure-2-cyano-4-n-octylphenylester,
4-trans-[2-Methylheptyl)-phenyl]-cyclohexancarbonsäure-2-cyano-4-n-octylphenylester,

4-trans-(4-Methylphenyl)-cyclohexancarbonsäure-2-cyano-4-n-nonylphenylester,
4-trans-(4-Äthylphenyl)-cyclohexancarbonsäure-2-cyano-4-n-nonylphenylester,
4-trans-(4-n-Propylphenyl)-cyclohexancarbonsäure-2-cyano-4-n-nonylphenylester,
4-trans-(4-n-Butylphenyl)-cyclohexancarbonsäure-2-cyano-4-n-nonylphenylester,
4-trans-(4-n-Pentylphenyl)-cyclohexancarbonsäure-2-cyano-4-n-nonylphenylester,
4-trans-(4-n-Hexylphenyl)-cyclohexancarbonsäure-2-cyano-4-n-nonylphenylester,
4-trans-(4-n-Heptylphenyl)-cyclohexancarbonsäure-2-cyano-4-n-nonylphenylester,
4-trans-(4-n-Octylphenyl)-cyclohexancarbonsäure-2-cyano-4-n-nonylphenylester,
4-trans-(4-n-Nonylphenyl)-cyclohexancarbonsäure-2-cyano-4-n-nonylphenylester,
4-trans-(4-n-Decylphenyl)-cyclohexancarbonsäure-2-cyano-4-n-nonylphenylester,
4-trans-[4-(2-Methylpropyl)-phenyl]-cyclohexancarbonsäure-2-cyano-4-n-nonylphenylester,
4-trans-[4-(2-Methylbutyl)-phenyl]-cyclohexancarbonsäure-2-cyano-4-n-nonylphenylester,
4-trans-[4-(3-Methylbutyl)-phenyl]-cyclohexancarbonsäure-2-cyano-4-n-nonylphenylester,
4-trans-[4-(2-Methylheptyl)-phenyl]-cyclohexancarbonsäure-2-cyano-4-n-nonylphenylester,
4-trans-(4-Methylphenyl)-cyclohexancarbonsäure-2-cyano-4-n-decylphenylester,
4-trans-(4-Äthylphenyl)-cyclohexancarbonsäure-2-cyano-4-n-decylphenylester,
4-trans-(4-n-Propylphenyl)-cyclohexancarbonsäure-2-cyano-4-n-decylphenylester,
4-trans-(4-n-Butylphenyl)-cyclohexancarbonsäure-2-cyano-4-n-decylphenylester,
4-trans-(4-n-Pentylphenyl)-cyclohexancarbonsäure-2-cyano-4-n-decylphenylester,
4-trans-(4-n-Hexylphenyl)-cyclohexancarbonsäure-2-cyano-4-n-decylphenylester,
4-trans-(4-n-Heptylphenyl)-cyclohecancarbonsäure-2-cyano-4-n-decylphenylester,
4-trans-(4-n-Octylphenyl)-cyclohexancarbonsäure-2-cyano-4-n-decylphenylester,
4-trans-(4-n-Nonylphenyl)-cyclohexancarbonsäure-2-cyano-4-n-decylphenylester,
4-trans-(4-n-Decylphenyl)-cyclohexancarbonsäure-2-cyano-4-n-decylphenylester,
4-trans-[4-(2-Methylpropyl)-phenyl]-cyclohexancarbonsäure-2-cyano-4-n-decylphenylester,
4-trans-[4-(2-Methylbutyl)-phenyl]-cyclohexancarbonsäure-2-cyano-4-n-decylphenylester,
4-trans-[4-(3-Methylbutyl)-phenyl]-cyclohexancarbonsäure-2-cyano-4-n-decylphenylester,
4-trans-[4-(2-Methylheptyl)-phenyl]-cyclohexancarbonsäure-2-cyano-4-n-decylphenylester,
4-trans-(4-Methylphenyl)-cyclohexancarbonsäure-2-cyano-4-(2-methylbutyl)-phenylester,
4-trans-(4-Äthylphenyl)-cyclohexancarbonsäure-2-cyano-4-(2-methylbutyl)-phenylester,
4-trans-(4-n-Propylphenyl)-cyclohexancarbonsäure-2-cyano-4-(2-methylbutyl)-phenylester,
4-trans-(4-n-Butylphenyl)-cyclohexancarbonsäure-2-cyano-4-(2-methylbutyl)-phenylester,
4-trans-(4-n-Pentylphenyl-cyclohexancarbonsäure-2-cyano-4-(2-methylbutyl)-phenylester,
4-trans-(4-n-Hexylphenyl)-cyclohexancarbonsäure-2-cyano-4-(2-methylbutyl)-phenylester,
4-trans-(4-n-Heptylphenyl)-cyclohexancarbonsäure-2-cyano-4-(2-methylbutyl)-phenylester,
4-trans-(4-n-Octylphenyl)-cyclohexancarbonsäure-2-cyano-4-(2-methylbutyl)-phenylester,
4-trans-(4-n-Nonylphenyl)-cyclohexancarbonsäure-2-cyano-4-(2-methylbutyl)-phenylester,
4-trans-(4-n-Decylphenyl)-cyclohexancarbonsäure-2-cyano-4-(2-methylbutyl)-phenylester,
4-trans-(4-Methylphenyl)-cyclohexancarbonsäure-2-cyano-4-(3-methylbutyl)-phenylester,
4-trans-(4-Äthylphenyl)-cyclohexancarbonsäure-2-cyano-4-(3-methylbutyl)-phenylester,
4-trans-(4-n-Propylphenyl)-cyclohexancarbonsäure-2-cyano-4-(3-methylbutyl)-phenylester,
4-trans-(4-n-Butylphenyl)-cyclohexancarbonsäure-2-cyano-4-(3-methylbutyl)-phenylester,
4-trans-(4-n-Pentylphenyl)-cyclohexancarbonsäure-2-cyano-4-(3-methylbutyl)-phenylester,
4-trans-(4-n-Hexylphenyl)-cyclohexancarbonsäure-2-cyano-4-(3-methylbutyl)-phenylester,
4-trans-(4-n-Heptylphenyl)-cyclohexancarbonsäure-2-cyano-4-(3-methylbutyl)-phenylester,
4-trans-(4-n-Octylphenyl)-cyclohexancarbonsäure-2-cyano-4-(3-methylbutyl)-phenylester,
4-trans-(4-n-Nonylphenyl)-cyclohexancarbonsäure-2-cyano-4-(3-methylbutyl)-phenylester,
4-trans-(4-n-Decylphenyl)-cyclohexancarbonsäure-2-cyano-4-(3-methylbutyl)-phenylester,
4-trans-(4-Methylphenyl)-cyclohexancarbonsäure-2-cyano-4-(2-äthylhexyl)-phenylester,
4-trans-(4-Äthylphenyl)-cyclohexancarbonsäure-2-cyano-4-(2-äthylhexyl)-phenylester,
4-trans-(4-n-Propylphenyl)-cyclohexancarbonsäure-2-cyano-4-(2-äthylhexyl)-phenylester,
4-trans-(4-n-Butylphenyl)-cyclohexancarbonsäure-2-cyano-4-(2-äthylhexyl)-phenylester,
4-trans-(4-n-Pentylphenyl)-cyclohexancarbonsäure-2-cyano-4-(2-äthylhexyl)-phenylester,
4-trans-(4-n-Hexylphenyl)-cyclohexancarbonsäure-2-cyano-4-(2-äthylhexyl)-phenylester,
4-trans-(4-n-Heptylphenyl)-cyclohexancarbonsäure-2-cyano-4-(2-äthylhexyl)-phenylester,
4-trans-(4-n-Octylphenyl)-cyclohexancarbonsäure-2-cyano-4-(2-äthylhexyl)-phenylester,
4-trans-(4-n-Nonylphenyl)-cyclohexancarbonsäure-2-cyano-4-(2-äthylhexyl)-phenylester,
4-trans-(4-n-Decylphenyl)-cyclohexancarbonsäure-2-cyano-4-(2-äthylhexyl)-phenylester,
4-trans-(4-Methylphenyl)-cyclohexancarbonsäure-2-cyano-4-(1-methylheptyl)-phenylester,
4-trans-(4-Äthylphenyl)-cyclohexancarbonsäure-2-cyano-4-(1-methylheptyl)-phenylester,
4-trans-(4-n-Propylphenyl)-cyclohexancarbonsäure-2-cyano-4-(1-metylheptyl)-phenylester,
4-trans-(4-n-Butylphenyl)-cyclohexancarbonsäure-2-cyano-4-(1-methylheptyl)-phenylester,
4-trans-(4-n-Pentylphenyl)-cyclohexancarbonsäure-2-cyano-4-(1-methylheptyl)-phenylester,
4-trans-(4-n-Hexylphenyl)-cyclohexancarbonsäure-2-cyano-4-(1-methylheptyl)-phenylester,
4-trans-(4-n-Heptylphenyl)-cyclohexancarbonsäure-2-cyano-4-(1-methylheptyl)-phenylester,

4-trans-(4-n-Octylphenyl)-cyclohexancarbonsäure-2-cyano-4-(1-methyheptyl)-phenylester,
4-trans-(4-n-Nonylphenyl)-cyclohexancarbonsäure-2-cyano-4-(1-methyheptyl)-phenylester,
4-trans-(4-n-Decylphenyl)-cyclohexancarbonsäure-2-cyano-4-(1-methylheptyl)-phenylester,
4-trans-(4-Methylphenyl)-cyclohexancarbonsäure-2-cyano-4-(2-methylhexyl)-phenylester,
4-trans-(4-Äthylphenyl)-cyclohexancarbonsäure-2-cyano-4-(2-methylhexyl)-phenylester,
4-trans-(4-n-Propylphenyl)-cyclohexancarbonsäure-2-cyano-4-(2-methylhexyl)-phenylester,
4-trans-(4-n-Butylphenyl)-cyclohexancarbonsäure-2-cyano-4-(2-methylhexyl)-phenylester,
4-trans-(4-n-Pentylphenyl)-cyclohexancarbonsäure-2-cyano-4-(2-methylhexyl)-phenylester,
4-trans-(4-n-Hexylphenyl)-cyclohexancarbonsäure-2-cyano-4-(2-methylhexyl)-phenylester,
4-trans-(4-n-Heptylphenyl)-cyclohexancarbonsäure-2-cyano-4-(2-methylhexyl)-phenylester,
4-trans-(4-n-Octylphenyl)-cyclohexancarbonsäure-2-cyano-4-(2-methylhexyl)-phenylester,
4-trans-(4-n-Nonylphenyl)-cyclohexancarbonsäure-2-cyano-4-(2-methylhexyl)-phenylester,
4-trans-(4-n-Decylphenyl)-cyclohexancarbonsäure-2-cyano-4-(2-methylhexyl)-phenylester.

## Beispiel 3

Die flüssigkristalline Basismischung aus

33% 4-Äthyl-4'-methoxyazoxybenzol und
67% 4-n-Butyl-4'-methoxyazoxybenzol

hat einen F. von −5° C, einen K. von 73° C und eine DKA von −0,25.

In dieser Basismischung ist 4-(4-n-Pentylcyclohexyl)-Benzoesäure-2-cyano-4-n-heptylphenylester zu 31% (bezogen auf die Gesamtmischung) löslich. Das erhaltene flüssigkristalline Dielektrikum hat einen F. von −15° C, einen K. von 84° C und eine DKA von −1,5.

Der analoge 4-(4-n-Pentylphenyl)-benzoesäure-2-cyano-4-n-heptylphenylester (DE-OS 26 13 293) ist demgegenüber in der gleichen Basismischung nur zu 15% löslich; das dabei erhaltene Dielektrikum hat einen engeren Temperaturbereich der nematischen Phase (F. −9° C, K. 77° C) und eine geringere negative DKA von −0,8.

## Beispiel 4

Die flüssigkristalline Basismischung aus

67% Anissäure-4-n-pentylphenylester und
33% 4-n-Hexyloxybenzoesäure-4-n-pentylphenylester

hat einen F. von 11° C, einen K. von 49° C und eine DKA von +0,1.

In dieser Basismischung ist 4-(4-n-Pentylcyclohexyl)-benzoesäure-2-cyano-4-n-pentylphenylester zu 38% (bezogen auf die Gesamtmischung) löslich. Das erhaltene Dielektrikum hat einen F. von −4° C, einen K. von 72° C und eine DKA von −1,3.

Die isomere Verbindung 4-(4-n-Pentylphenyl)-cyclohexancarbonsäure-2-cyano-4-n-pentylphenylester ist in der gleichen Basismischung zu 28% löslich. Das dabei erhaltene Dielektrikum hat einen F. von 0° C, einen K. von 49° C und eine DKA von −0,9.

Von dem analogen 4-(4-n-Pentylphenyl)-benzoesäure-2-cyano-4-n-pentylphenylester (DE-OS 26 13 293) lassen sich in dieser Basismischung dagegen nur 8% lösen; das dabei erhaltene Dielektrikum hat einen engeren Temperaturbereich der nematischen Phase (F. 8° C, K. 53° C) und eine DKA von nur −0,2.

## Beispiel 5

Die flüssigkristalline Basismischung aus

61% N-(4-Methoxybenzyliden)-4-n-butylanilin und
39% N-(4-Äthoxybenzyliden)-4-n-butylanilin

hat einen F. von −5° C, einen K. von 59° C und eine DKA von −0,5.

In dieser Basismischung ist 4-(4-n-Propylcyclohexyl)-benzoesäure-2-cyano-4-n-butylphenylester zu 28% (bezogen auf die Gesamtmischung) löslich. Das erhaltene flüssigkristalline Dielektrikum hat einen F. von −14°, einen K. von 72° C und eine DKA von −1,4.

Von dem ähnlichen 4-(4-n-Propylphenyl)-benzoesäure-2-cyano-4-n-pentylphenylester nach der DE-OS 26 13 293 lassen sich in der gleichen Basismischung 10% lösen, wobei ein Dielektrikum mit einem engeren Temperaturbereich der nematischen Phase (F. −8° C, K. 64° C) und einer DKA von nur −0,8 erhalten wird.

Beispiel 5

Die flüssigkristalline Basismischung aus

72% 4-n-Propyl-1-(4-n-butyryloxyphenyl)-cyclohexan und
38% 4-(4-n-Butylcyclohexyl)-benzoesäure-4-n-propylcyclohexylester

hat einen F. von 3°C, einen K. von 63° und eine DKA von −0,7. Aus 70% dieser Basismischung und 30% 4-(4-n-Propylcyclohexyl)-benzoesäure-2-cyano-4-n-butylphenylester erhält man ein flüssigkristallines Dielektrikum mit einem F. von −7°C, einem K. von +75°C und einer DKA von −1,3.

**Patentansprüche für die Vertragsstaaten CH, DE, FR, GB, IT, NL**

1. Flüssigkristalline Carbonsäureester der Formel (I)

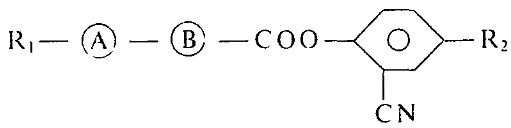
(I)

worin einer der Ringe A und B ein 1,4-disubstituierter Phenylring und der andere ein 1,4-disubstituierter Cyclohexanring ist, und $R_1$ und $R_2$ Alkyl mit 1–10 C-Atomen bedeuten.

2. Flüssigkristalline Carbonsäureester nach Anspruch 1 der Formel (Ia)

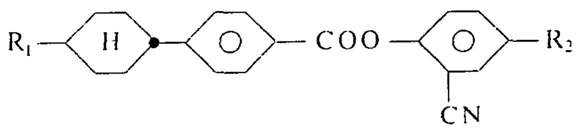
(Ia)

worin $R_1$ und $R_2$ Alkyl mit 1–10 C-Atomen bedeuten.

3. Flüssigkristalline Carbonsäureester nach Anspruch 1 der Formel (Ib)

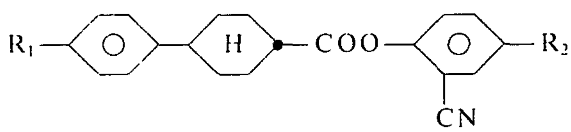
(Ib)

4. Verfahren zur Herstellung flüssigkristalliner Carbonsäureester der Formel (I)

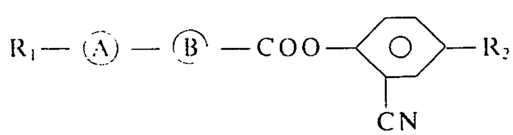
(I)

worin einer der Ringe A und B ein 1,4-disubstituierter Phenylring und der andere ein 1,4-disubstituierter Cyclohexanring ist, und $R_1$ und $R_2$ Alkyl mit 1–10 C-Atomen bedeuten, dadurch gekennzeichnet, daß man eine Verbindung der Formel (II)

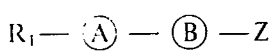
(II)

worin Z COOH oder ein reaktionsfähiges Derivat der Carboxylgruppe bedeutet und A, B und $R_1$ die in Formel (I) angegebene Bedeutung besitzen, bei einer Temperatur zwischen −50°C und +250°C,

gegebenenfalls in Gegenwart eines organischen Lösungsmittels und/oder eines Veresterungskatalysators, mit einer Verbindung der Formel (III) umsetzt,

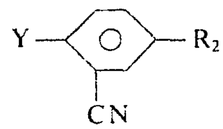 (III)

worin Y OH oder OMe bedeutet, wobei Me ein Äquivalent eines Metall- oder Ammoniumkations ist, und $R_2$ die in Formel (I) angegebene Bedeutung besitzt.

5. Dielektrikum mit mindestens 2 flüssigkristallinen Komponenten, dadurch gekennzeichnet, daß mindestens eine Komponente eine Verbindung der Formel (I) ist,

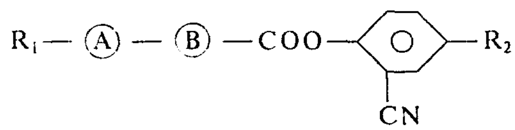 (I)

worin einer der Ringe A und B ein 1,4-disubstituierter Phenylring und der andere ein 1,4-disubstituierter Cyclohexanring ist, und $R_1$ und $R_2$ Alkyl mit 1—10 C-Atomen bedeuten.

6. Dielektrikum nach Anspruch 5, dadurch gekennzeichnet, daß es 1—50 Gewichtsprozent einer Verbindung der Formel (I) enthält.

7. Verwendung einer Verbindung der Formel (I)

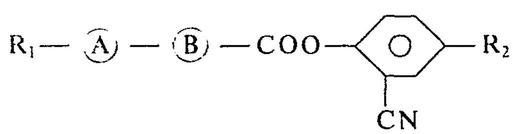 (I)

worin einer der Ringe A und B ein 1,4-disubstituierter Phenylring und der andere ein 1,4-disubstituierter Cyclohexanring ist, und $R_1$ und $R_2$ Alkyl mit 1—10 C-Atomen bedeuten, als Komponente eines flüssigkristallinen Dielektrikums.

8. Elektrooptisches Anzeigeelement auf der Basis einer Flüssigkristallzelle, dadurch gekennzeichnet, daß es ein Dielektrikum nach Anspruch 5 enthält.

**Patentansprüche für den Vertragsstaat AT**

1. Verfahren zur Herstellung flüssigkristalliner Carbonsäureester der Formel (I)

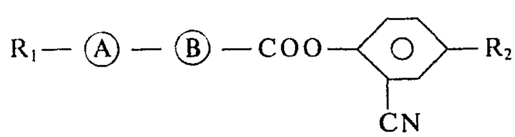 (I)

worin einer der Ringe A und B ein 1,4-disubstituierter Phenylring und der andere ein 1,4-disubstituierter Cyclohexanring ist, und $R_1$ und $R_2$ Alkyl mit 1—10 C-Atomen bedeuten, dadurch gekennzeichnet, daß man eine Verbindung der Formel (II)

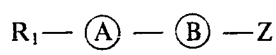 (II)

worin Z COOH oder ein reaktionsfähiges Derivat der Carboxylgruppe bedeutet und A, B und $R_1$ die in Formel (I) angegebenen Bedeutung besitzen, bei einer Temperatur zwischen $-50°C$ und $+250°C$,

gegebenenfalls in Gegenwart eines organischen Lösungsmittels und/oder eines Veresterungskatalysators, mit einer Verbindung der Formel (III) umsetzt,

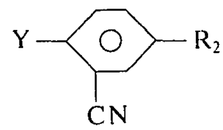

(III)

worin Y OH oder OMe bedeutet, wobei Me ein Äquivalent eines Metall- oder Ammoniumkations ist, und $R_2$ die in Formel (I) angegebene Bedeutung besitzt.

2. Dielektrikum mit mindestens 2 flüssigkristallinen Komponenten, dadurch gekennzeichnet, daß mindestens eine Komponente eine Verbindung der Formel (I) ist,

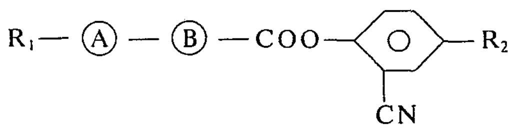

(I)

worin einer der Ringe A und B ein 1,4-disubstituierter Phenylring und der andere ein 1,4-disubstituierter Cyclohexanring ist, und $R_1$ und $R_2$ Alkyl mit 1—10 C-Atomen bedeuten.

3. Dielektrikum nach Anspruch 2, dadurch gekennzeichnet, daß es 1—50 Gewichtsprozent einer Verbindung der Formel (I) enthält.

4. Verwendung einer Verbindung der Formel (I)

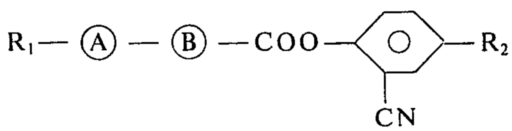

(I)

worin einer der Ringe A und B ein 1,4-disubstituierter Phenylring und der andere ein 1,4-disubstituierter Cyclohexanring ist, und $R_1$ und $R_2$ Alkyl mit 1—10 C-Atomen bedeuten, als Komponente eines flüssigkristallinen Dielektrikums.

5. Elektrooptisches Anzeigeelement auf der Basis einer Flüssigkristallzelle, dadurch gekennzeichnet, daß es ein Dielektrikum nach Anspruch 2 enthält.

**Claims for Contracting States CH, DE, FR, GB, IT, NL**

1. Liquid crystal carboxylic acid esters of the formula (I)

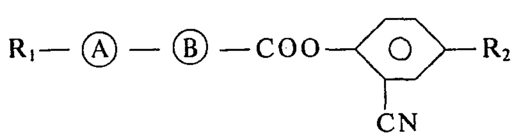

(I)

in which one of the rings A and B is a 1,4-disubstituted phenyl ring and the other is a 1,4-disubstituted cyclohexane ring and $R_1$ and $R_2$ are alkyl with 1—10 C atoms.

2. Liquid crystal carboxylic acid esters according to Claim 1, of the formula (Ia)

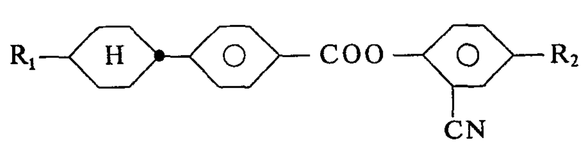

(Ia)

in which $R_1$ and $R_2$ are alkyl with 1—10 C atoms.

3. Liquid crystal carboxylic acid esters according to Claim 1, of the formula (Ib)

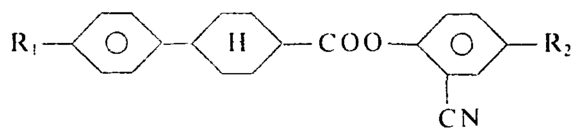

(Ib)

4. Process for the preparation of liquid crystal carboxylic acid esters of the formula (I)

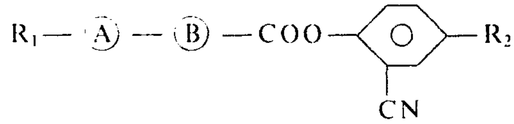

(I)

in which one of the rings A and B is a 1,4-disubstituted phenyl ring and the other is a 1,4-disubstituted cyclohexane ring and $R_1$ and $R_2$ are alkyl with 1—10 C atoms, characterised in that a compound of the formula (II)

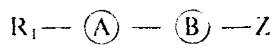

(II)

in which Z is COOH or a reactive derivative of the carboxyl group and A, B and $R_1$ are as defined in formula (I), is reacted at a temperature between −50° C and +250° C, optionally in the presence of an organic solvent and/or of an esterification catalyst, with a compound of the formula (III)

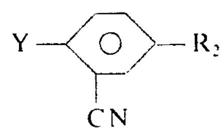

(III)

in which Y is OH or OMe, in which Me is one equivalent of a metal cation or ammonium cation, and $R_2$ is as defined in formula (I).

5. Dielectric with at least 2 liquid crystal components, characterised in that at least one component is a compound of the formula (I)

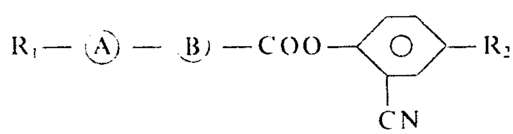

(I)

in which one of the rings A and B is a 1,4-disubstituted phenyl ring and the other is a 1,4-disubstituted cyclohexane ring and $R_1$ and $R_2$ are alkyl with 1—10 C atoms.

6. Dielectric according to Claim 5, characterised in that it contains 1—50 per cent by weight of a compound of the formula (I).

7. Use of a compound of the formula (I)

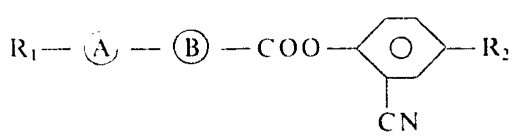

(I)

in which one of the rings A and B is a 1,4-disubstituted phenyl ring and the other is a 1,4-disubstituted cyclohexane ring and $R_1$ and $R_2$ are alkyl with 1—10 C atoms, as a component of a liquid crystal dielectric.

8. Electrooptical display element bases on a liquid crystal cell, characterised in that it contains a dielectric according to Claim 5.

**Claims for Contracting State AT**

1. Process für the preparation of liquid crystal carboxylic acid esters of the formula (I)

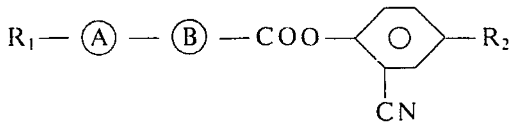

(I)

in which one of the rings A and B is a 1,4-disubstituted phenyl ring and the other is a 1,4-disubstituted cyclohexane ring and $R_1$ and $R_2$ are alkyl with 1—10 C atoms, characterised in that a compound of the formula (II)

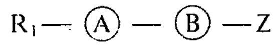

(II)

in which Z is COOH or a reactive derivative of the carboxyl group and A, B and $R_1$ are as defined in formula (I), is reacted at a temperature between −50° C and +250° C, optionally in the presence of an organic solvent and/or of an esterification catalyst, with a compound of the formula (III)

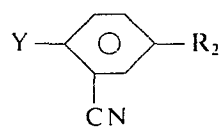

(III)

in which Y is OH or OMe, in which Me is one equivalent of a metal cation or ammonium cation, and $R_2$ is as defined in formula (I).

2. Dielectric with at least 2 liquid crystal components, characterised in that at least one component is a compound of the formula (I)

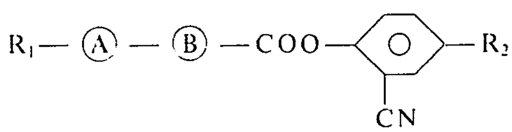

(I)

in which on of the rings A and B is a 1,4-disubstituted phenyl ring and the other is a 1,4-disubstituted cyclohexane ring and $R_1$ and $R_2$ are alkyl with 1—10 C atoms.

3. Dielectric according to Claim 2, characterised in that it contains 1—50 per cent by weight of a compound of the formula (I).

4. Use of a compound of the formula (I)

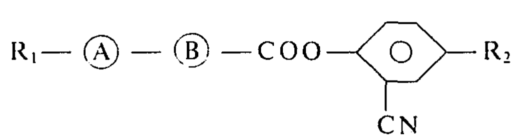

(I)

in which one of the rings A and B is a 1,4-disubstituted phenyl ring and the other is a 1,4-disubstituted cyclohexane ring and $R_1$ and $R_2$ are alkyl with 1—10 C atoms, as a component of a liquid crystal cielectric.

5. Electrooptical display element based on a liquid crystal cell, characterised in that it contains a dielectric according to Claim 2.

**Revendications pour les Etat contractant CH, DE, FR, GB, IT, NL**

1. Esters d'acides carboxyliques possédant des propriétés de cristaux liquides, de formule I

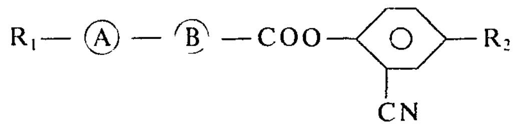

(I)

dans laquelle l'un des noyaux A et B est un noyau phényle 1,4-disubstitué et l'autre un noyau de cyclohexane 1,4-disubstitué, et $R_1$ et $R_2$ sont des groupes alkyles en $C_1-C_{10}$.

2. Esters d'acides carboxyliques à cristaux liquides selon la revendication 1, de formule Ia

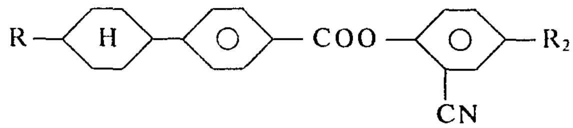

(Ia)

dans laquelle $R_1$ et $R_2$ sont des groupes alkyles en $C_1-C_{10}$.

3. Esters d'acides carboxyliques à cristaux liquides selon la revendication 1, de formule Ib

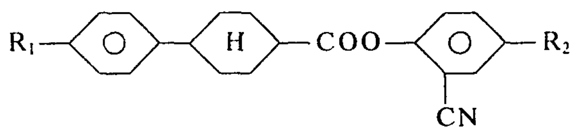

(Ib)

4. Procédé de préparation d'esters carboxyliques possédant des propriétés de cristaux liquides et répondant à la formule I

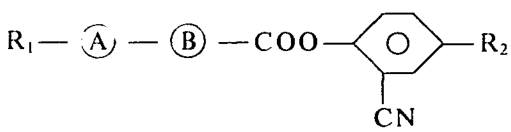

(I)

dans laquelle l'un des noyaux A et B est un noyau phényle 1,4-disubstitué et l'autre un noyau cyclohexane 1,4-disubstitué, et $R_1$ et $R_2$ sont des groupes alkyles en $C_1-C_{10}$,
caractérisé en ce que l'on fait réagir un composé de formule II

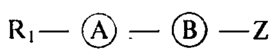

(II)

dans laquelle Z représente un groupe COOH ou un dérivé réactif du groupe carboxyle et A, B et $R_1$ ont les significations indiquées en référence à la formule I, à une température comprise entre $-50$ et $+250°$ C, le cas échéant en présence d'un solvant organique et/ou d'un catalyseur d'estérification, avec un composé de formule III

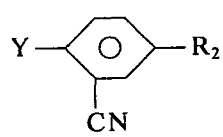

(III)

dans laquelle Y représente OH ou OMe, Me étant un équivalent d'un cation métallique ou d'ammonium, et $R_2$ a les significations indiquées en référence à la formule I.

5. Diélectrique à au moins deux composants à cristaux liquides, caractérisé en ce que l'un au moins des composants est un composé de formule I

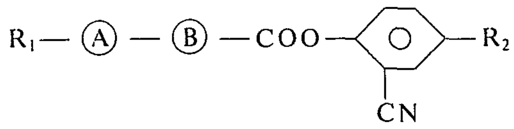

(I)

dans laquelle l'un des noyaux A et B est un noyau phényle 1,4-disubstitué et l'autre un noyau de cyclohexane 1,4-disubstitué, et $R_1$ et $R_2$ sont des groupes alkyles en $C_1-C_{10}$.

6. Diélectrique selon la revendication 5, caractérisé en ce qu'il contient de 1 à 50% en poids d'un composé de formule I.

7. Utilisation d'un composé de formule I

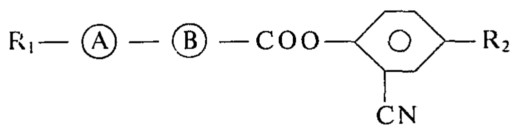

(I)

dans laquelle l'un des noyaux A et B est un noyau phényle 1,4-disubstitué et l'autre un noyau de cyclohexane 1,4-disubstitué, et $R_1$ et $R_2$ des groupes alkyles en $C_1-C_{10}$, en tant que composant d'un diélectrique à cristaux liquides.

8. Elément d'affichage électro-optique à base d'une cellule à cristaux liquides, caractérisé en ce qu'il contient un diélectrique selon la revendication 5.

**Revendications l'Etat contractant AT**

1. Procédé de préparation d'esters carboxyliques possédant des propriétés de cristaux liquides et répondant à la formule I

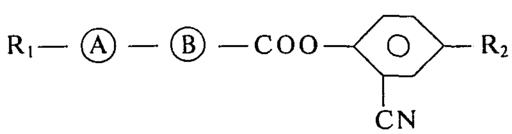

(I)

dans laquelle l'un des noyaux A et B est un noyau phényle 1,4-disubstitué et l'autre un noyau cyclohexane 1,4-disubstitué, et $R_1$ et $R_2$ sont des groupes alkyles en $C_1-C_{10}$,
caractérisé en ce que l'on fait réagir un composé de formule II

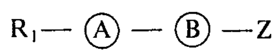

(II)

dans laquelle Z représente un groupe COOH ou un dérivé réactif du groupe carboxyle et A, B et $R_1$ ont les significations indiquées en référence à la formule I, à une température comprise entre −50 et +250° C, le cas échéant en présence d'un solvant organique et/ou d'un catalyseur d'estérification, avec un composé de formule III

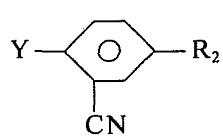

(III)

dans laquelle Y représente OH ou OMe, Me étant un équivalent d'un cation métallique ou d'ammonium, et $R_2$ a les significations indiquées en référence à la formule I.

2. Diélectrique à au moins deux composants à cristaux liquides, caractérisé en ce que l'un au moins des composants est un composé de formule I

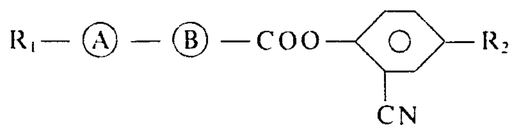

(I)

dans laquelle l'un des noyaux A et B est un noyau phényle 1,4-disubstitué et l'autre un noyau de cyclohexane 1,4-disubstitué, et $R_1$ et $R_2$ sont des groupes alkyles en $C_1-C_{10}$.

3. Diélectrique selon la revendication 2, caractérisé en ce qu'il contient de 1 à 50% en poids d'un composé de formule I.

4. Utilisation d'un composé de formule I

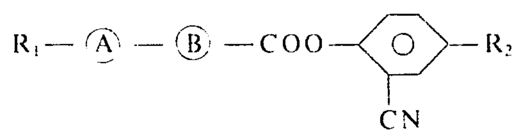

(I)

dans laquelle l'un des noyaux A et B est un noyau phényle 1,4-disubstitué et l'autre un noyau de cyclohexane 1,4-disubstitué, et $R_1$ et $R_2$ des groupes alkyles en $C_1-C_{10}$, en tant que composant d'un diélectrique à cristaux liquides.

5. Elément d'affichage électro-optique à base d'une cellule à cristaux liquides, caractérisé en ce qu'il contient un diélectrique selon la revendication 2.